# EUROPEAN PATENT APPLICATION

(11) **EP 4 707 517 A1**
(43) Date of publication of application: **11.03.2026**
(21) Application number: 25805930.2
(22) Date of filing: 10.07.2025
(51) Int. Cl.: E05F 15/60

(54) **DUAL-MODE VEHICLE DOOR ELECTRIC SYSTEM AND VEHICLE HAVING ELECTRIC SYSTEM**

(30) Priority: 10.07.2024 CN 202410921533
(71) Applicant: Chery Automobile Co., Ltd., Wuhu, Anhui 241006 (CN)
(72) Inventor: LI, Xin, Wuhu, Anhui 241006 (CN); PANG, Bo, Wuhu, Anhui 241006 (CN); YU, Kesheng, Wuhu, Anhui 241006 (CN); LIU, Shuzhan, Wuhu, Anhui 241006 (CN)
(74) Representative: dompatent
(86) International application number: PCT/CN2025/107962
(87) International publication number: WO 2026/012442

(57) **Abstract**

The present disclosure relates to the field of vehicle doors, and in particular, to a dual-mode vehicle door electric system and a vehicle with the same. The electric system includes a hinge assembly, wherein the hinge assembly is connected with a connecting mechanism and a driving mechanism; the driving mechanism includes a side opening driving mechanism and a swing-up driving mechanism; the hinge assembly includes a bracket mechanism and a locking mechanism; the bracket mechanism includes a vehicle body member and a vehicle door member, the vehicle door member being rotatable on the vehicle body member; the connecting mechanism includes a vehicle door connecting member arranged on the vehicle door member, the vehicle door connecting member being rotatable on the vehicle door member under the push of the side opening driving mechanism; and the locking mechanism includes a first locking part and a second locking part that are connected to the vehicle door member for locking and limiting the vehicle door. In the present disclosure, through the cooperation of the hinge assembly, the connecting mechanism, and the driving mechanism, the vehicle door installed with the electric system can have two door opening methods, which facilitates the use of the vehicle door in the actual opening process.

## Description

The present disclosure claims priority to Chinese Patent Application No. 202410921533.7, filed on July 10, 2024 and entitled "DUAL-MODE VEHICLE DOOR ELECTRIC SYSTEM AND VEHICLE WITH SAME", the disclosure of which is incorporated herein by reference in its entirety.

### TECHNICAL FIELD

The present disclosure relates to the field of vehicle doors, and in particular, to a dual-mode vehicle door electric system and a vehicle with the same.

### BACKGROUND

With the rapid development of automobile technology, especially for young people, customers are increasingly pursuing the rejuvenation and personalization of vehicles, the opening and closing methods of vehicle doors are becoming more and more abundant, and the vehicle door hinges for mounting scissor doors are more conventional.

In recent years, various opening and closing forms of a closure member have become a key research focus for major OEMs, such as an electric side-opening door, a scissor door, a gull-wing door, and a tailgate.

These novel opening and closing methods of the closure member, in combination with the increasingly mature intelligent control, can greatly reflect technological sophistication, luxury perception, and the sense of quality of the products, serving as key innovation drivers for customer attraction.

However, for a car, a low-slung body combined with scissor doors with upward-sweeping posture gives consumers a visual impact, which is highly favored by young customers.

However, existing vehicle doors are opened in a single manner. During conventional use, scissor doors need to be limited by longitudinal space, and conventional side-opening doors need to be limited by transverse space. That is, the opening of a conventional door body is limited by the environment outside the vehicle.

Based on prior art search, the existing patent CN215408025U, a vehicle door hinge structure, a vehicle door hinge assembly, and a vehicle, does not explicitly disclose the technical inspiration to solve the above technical problems.

Therefore, in order to ameliorate or solve at least one of the above problems, it is necessary to optimize the design of the existing vehicle door structure.

### SUMMARY

An objective of the present disclosure is to provide a vehicle door electric system in which a vehicle door has two opening methods.

In order to achieve the above objective, the technical solutions adopted in the present disclosure are as follows:
A dual-mode vehicle door electric system is provided. The electric system includes a hinge assembly, wherein the hinge assembly is connected with a connecting mechanism and a driving mechanism;
the driving mechanism includes a side opening driving mechanism and a swing-up driving mechanism;
the connecting mechanism is configured to be connected to a vehicle door;
the side opening driving mechanism is configured to push the vehicle door to rotate around the hinge assembly;
the swing-up driving mechanism is configured to drive the vehicle door to rotate through the hinge assembly;
the hinge assembly includes a bracket mechanism and a locking mechanism;
the bracket mechanism includes a vehicle body member and a vehicle door member, the vehicle door member being rotatable on the vehicle body member;
the connecting mechanism includes a vehicle door connecting member arranged on the vehicle door member, the vehicle door connecting member being rotatable on the vehicle door member under the push of the side opening driving mechanism; and
the locking mechanism includes a first locking part and a second locking part that are connected to the vehicle door member for locking and limiting the vehicle door.

A portion of the first locking part is connected to the vehicle door member, another portion of the first locking part is connected to the vehicle body member, and the first locking part is configured to lock rotation of the vehicle door member on the vehicle body member. A portion of the second locking part is connected to the vehicle door connecting member, another portion of the second locking part is connected to the vehicle door, and the second locking part is configured to lock rotation of the vehicle door connecting member on the vehicle door member.

The vehicle door member is connected to the vehicle body member through a rotating component. The rotating component includes a first rotating component and a second rotating component, wherein the first rotating component includes a rotating rod, one end of the rotating rod is rotatably connected to the vehicle body member, and the other end of the rotating rod is rotatably connected to the vehicle door member;
the vehicle door member is rotatable around a central axis of the rotating rod; and
the second rotating component includes a connecting rod, one end of the connecting rod is rotatably connected to the vehicle door member, and the other end of the connecting rod is connected to the vehicle body member through a ball joint mechanism.

The locking mechanism further includes a locking control component;
the locking control component includes a turntable; the turntable is connected with a rotation driving member configured to drive the turntable to rotate; the rotation driving member drives the turntable to rotate to control unlocking operations of the first locking part and the second locking part;
the turntable is separately connected to the first locking part and the second locking part by individual cables;
each of the cables is connected to the turntable by a regulating component; and
the regulating component includes a regulating arc-shaped groove formed on the turntable and a side surface communication groove, wherein the regulating arc-shaped groove is in communication with a side surface of the turntable through the side surface communication groove; and a cable head of the cable is disposed in the regulating arc-shaped groove, and a cable sheath of the cable is disposed on an outer side of the turntable.

The vehicle door member includes a frame body, and the frame body is provided with a first extension plate and a second extension plate, wherein the first extension plate and the second extension plate are disposed at an angle to the frame body; the first extension plate is configured to be connected to the side opening driving mechanism; and the second extension plate is configured to be connected to the second locking part.

The vehicle door connecting member is connected to the vehicle door member through a rotary support part; the rotary support part includes a lower support block arranged on the vehicle door member and an upper support block arranged on the vehicle door connecting member; the upper support block is connected to the lower support block through a rotating pin shaft; and the swing-up driving mechanism includes a first driving mechanism and a second driving mechanism, and the first driving mechanism and the second driving mechanism are disposed at intervals on the vehicle door member.

The side opening driving mechanism is configured to achieve a vehicle door side opening operation.

The swing-up driving mechanism is configured to achieve a vehicle door swing-up opening operation.

During the vehicle door swing-up opening operation:
steps of the vehicle door opening operation are as follows:
   a first locking part is first opened, a second locking part remains locked, a side door lock is then released, and then the swing-up driving mechanism is activated such that the vehicle door is driven to rotate upward to perform a rotor-like movement by rotation of the vehicle door member, thereby achieving the vehicle door swing-up opening operation; and
steps of a vehicle door closing operation are as follows:
   the swing-up driving mechanism is activated again such that the vehicle door is driven to rotate downward to perform a rotor-like movement by rotation of the vehicle door member, thereby achieving a vehicle door swing-up closing operation; and
   after the vehicle door is closed, the first locking part is locked, and the second locking part still remains in a locked state.

During the vehicle door side opening operation:
steps of the vehicle door opening operation are as follows:
The first locking part remains locked, the second locking part is opened, the side door lock is then released, and then the side opening driving mechanism is activated such that the vehicle door is enabled to rotate outward under the push of the side opening driving mechanism, thereby achieving the vehicle door side opening operation; and
the vehicle door closing operation step is as follows:
the side opening driving mechanism is activated such that the vehicle door is enabled to rotate inward under the pull of the side opening driving mechanism until the vehicle door reaches a set closed position, the side door lock then completes a snap-close action, and then the first locking part maintains a locking action, and the second locking part is locked.

During the vehicle door opening operation: in the case that the vehicle door performs the opening operation, the side opening driving mechanism or the swing-up driving mechanism is powered on; and the first locking part or/and the second locking part is provided with a damper.

A vehicle is provided. The vehicle includes a side wall assembly and a vehicle door, wherein the vehicle door is connected to the side wall assembly through the electric system;
the electric system is connected to the side wall assembly of a vehicle body;
the side wall assembly is provided with a plurality of clearance grooves for clearance; and
the vehicle further includes a control system, wherein the control system includes a detection module, the detection module is connected with a control module, and the control module is connected with an execution module.

The side wall assembly is provided with a home-position support mechanism. The home-position support mechanism includes a support limiting block arranged on the side wall assembly. In the case that the vehicle door is in a closed position, the vehicle door member presses against the support limiting block.

The advantages of the present disclosure are as follows:
Disclosed are a dual-mode vehicle door electric system and a vehicle with the same.

According to the present disclosure, through cooperation of the hinge assembly, the connecting mechanism, and the driving mechanism, the vehicle door installed with the electric system can have two door opening methods, which facilitates the use of the vehicle door in the actual opening process.

### BRIEF DESCRIPTION OF DRAWINGS

The following briefly describes the content expressed in the accompanying drawings of the specification of the present disclosure and the reference numerals in the drawings:
FIG. 1 is a schematic structural diagram of the present disclosure;
FIG. 2 is a schematic structural diagram of an electric system in the case that a vehicle door swing-up is opened according to the present disclosure;
FIG. 3 is a schematic structural diagram of the electric system in the case that a vehicle door is opened laterally according to the present disclosure;
FIG. 4 is a schematic structural diagram of the present disclosure mounted on a vehicle body;
FIG. 5 is a top view of the present disclosure mounted on the vehicle body;
FIG. 6 is a flowchart in the case that the vehicle door is opened according to the present disclosure;
FIG. 7 is a schematic structural diagram of a locking mechanism according to the present disclosure;
FIG. 8 is a schematic structural diagram of a locking control mechanism according to the present disclosure;
FIG. 9 is a schematic structural diagram of a side opening driving mechanism connected to the vehicle door according to the present disclosure;
FIG. 10 is a schematic structural diagram of connected to the side wall assembly according to the present disclosure.;
FIG. 11 is a schematic structural diagram of the locking control mechanism arranged on the side wall assembly according to the present disclosure;
FIG. 12 is a schematic structural diagram of the electric system with a damper connected to the side wall assembly;
FIG. 13 is a schematic structural diagram of a vehicle door member according to the present disclosure;
FIG. 14 is a schematic structural diagram of a vehicle body member according to the present disclosure;
FIG. 15 is a schematic structural diagram of a second lock catch provided with a damper according to the present disclosure; and
FIG. 16 is a schematic structural diagram of a home-position support mechanism according to the present disclosure.

The reference numerals in the drawings are as follows:
1-vehicle door, 2-side wall assembly, 3-vehicle door electric system.

### DETAILED DESCRIPTION

Specific embodiments of the present disclosure will be described in further detail below with reference to the accompanying drawings and through the description of the preferred embodiments.

A dual-mode vehicle door electric system 3 is provided. The electric system includes a hinge assembly, wherein the hinge assembly is connected with a connecting mechanism and a driving mechanism. In the present disclosure, through the cooperation of the hinge assembly, the connecting mechanism, and the driving mechanism, a vehicle door 1 installed with the electric system 3 can have two door opening methods, which facilitates the use of the vehicle door 1 in the actual opening process.

The vehicle door electric system 3 disclosed herein is mainly an electric system for opening and closing the vehicle door 1.

The vehicle door electric system 3 disclosed herein mainly includes a hinge assembly. In the present disclosure, the hinge assembly is essentially a vehicle door 1 hinge assembly for a scissor door. Herein, an existing scissor door hinge assembly may be used, or a hinge assembly described below in the present disclosure may be used. One function of the hinge assembly is to serve as a basic connection, and another function is to implement the swing-up opening of the vehicle door 1 (the opening of the scissor door).

The hinge assembly is connected with a connecting mechanism and a driving mechanism. In the present disclosure, the main function of the connecting mechanism is to connect the vehicle door 1 and the hinge assembly. Meanwhile, the connecting mechanism of the present disclosure also serves as a rotating member to facilitate the rotation of the vehicle door 1 around the connecting mechanism during subsequent use, thereby facilitating the side opening operation of the vehicle door 1.

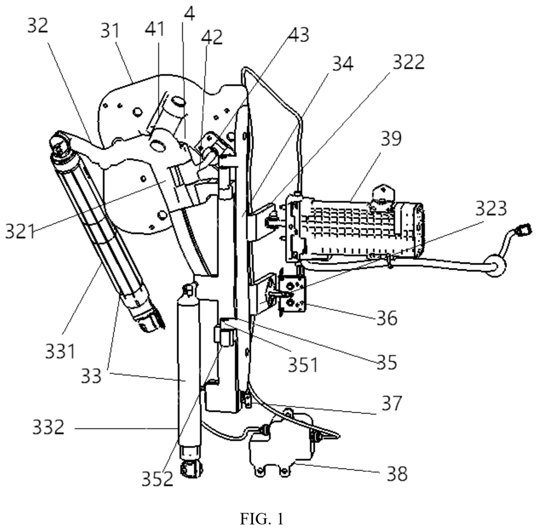

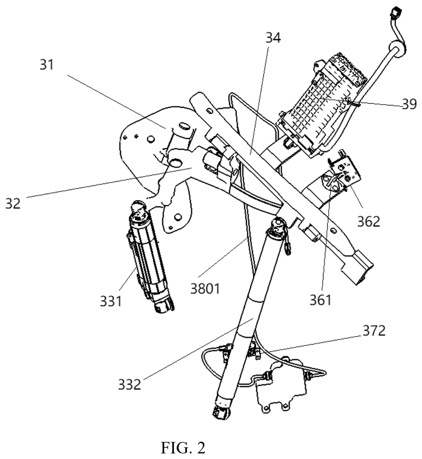

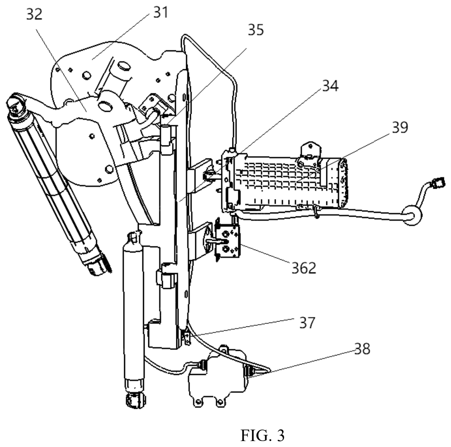

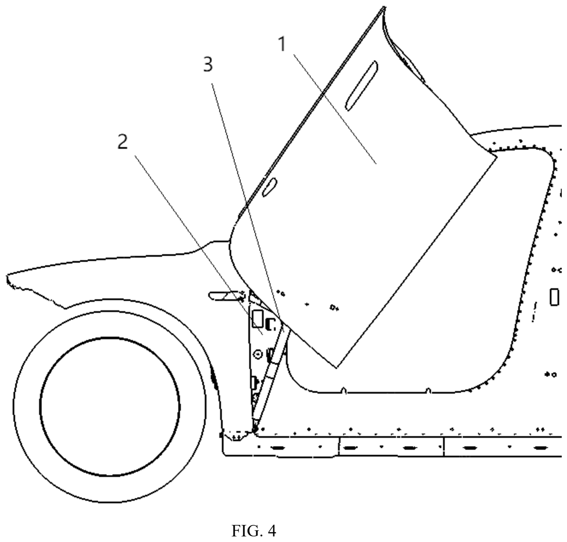

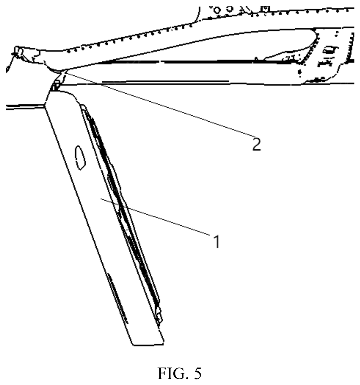

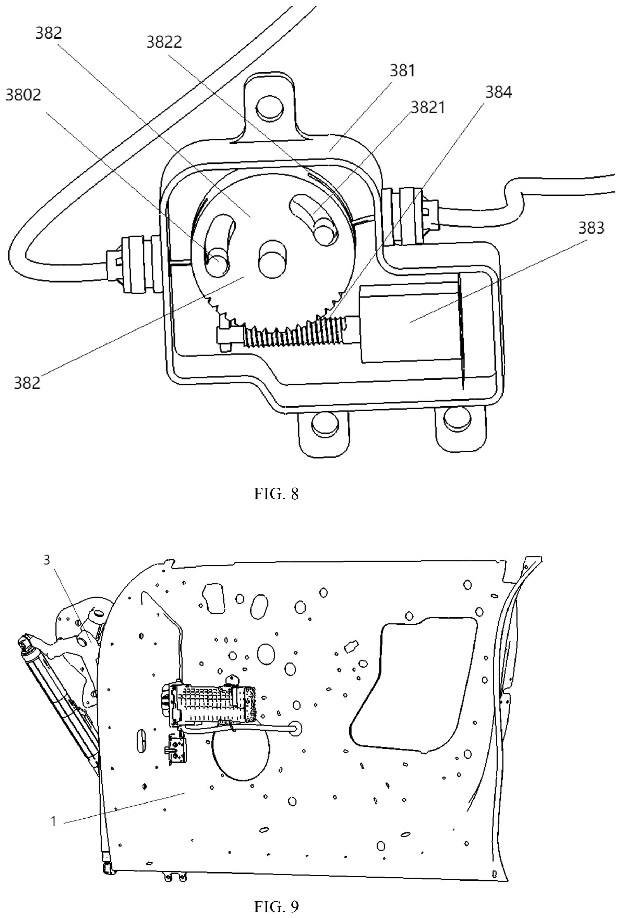

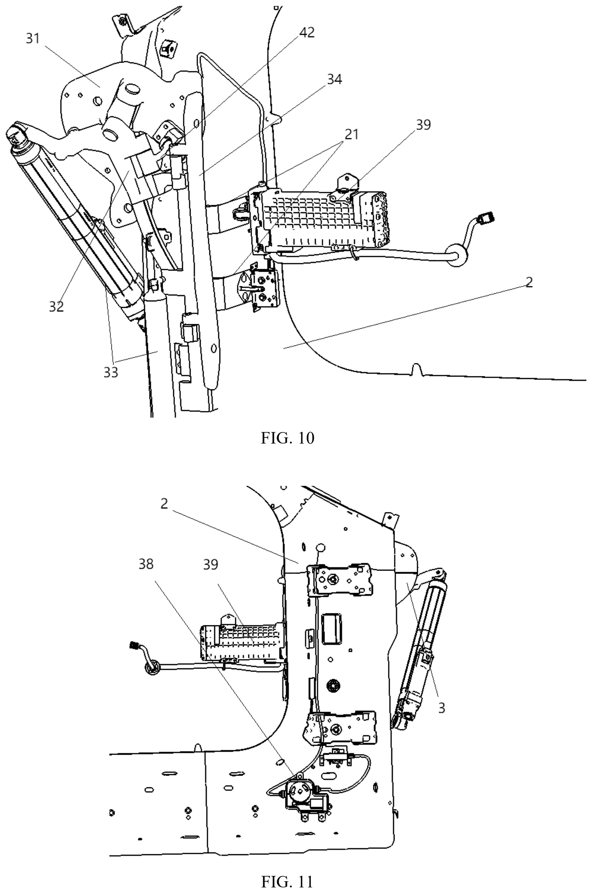

The driving mechanism serves as a driving member to facilitate the automatic opening and closing of the vehicle door 1. In the present disclosure:
With reference to FIG. 1 to FIG. 3, the driving mechanism includes a side opening driving mechanism 39 and a swing-up driving mechanism 33. The side opening driving mechanism 39 is generally an electric side opening actuator, and the electric side opening actuator is arranged on the inner side of the vehicle door 1, such that the front end of the vehicle door 1 extends out, and then the side opening pushing of the vehicle door 1 is achieved by the self-expanding and contracting motion of the electric side opening actuator (the side opening pushing may refer to FIG. 3 and FIG. 5). In the present disclosure, one end of the electric side opening actuator presses against the side wall assembly 2 (referring to FIG. 11 herein), and the other end of the electric side opening actuator is connected to the vehicle door 1 (referring to FIG. 9 herein), such that the opening operation of the vehicle door 1 is achieved by the extension of the electric side opening actuator. In addition, in the present disclosure, in order to facilitate the subsequent swing-up opening operation of the vehicle door 1 (the swing-up opening operation may refer to FIG. 2 and FIG. 4), it is required that the end portion of the electric side opening actuator is not directly connected to the side wall assembly 2, but acts on the side wall assembly 2 through a first extension plate 322 on a vehicle door member 32. Such an arrangement avoids the problem that the connection between the electric side opening actuator and the side wall assembly 2 affects the swing-up opening of the vehicle door 1.

The swing-up driving mechanism 33 mainly applies a rotational force to the hinge assembly, such that the vehicle door member 32 in the hinge assembly rotates around the vehicle body member 31, to drive the vehicle door 1 to rotate around the vehicle body member 31, thereby implementing the swing-up opening of the vehicle door 1.

In addition, in the present disclosure, the connecting mechanism is configured to be connected to the vehicle door 1, which facilitates the connection between the electric system 3 and the vehicle door 1. The side opening driving mechanism 39 can push the vehicle door 1 to rotate around the hinge assembly, which facilitates the side opening operation of the vehicle door 1. The swing-up driving mechanism 33 can drive the vehicle door 1 to rotate through the hinge assembly, which facilitates the swing-up opening operation of the vehicle door 1.

In the present disclosure, the hinge assembly includes a bracket mechanism and a locking mechanism. In the present disclosure, the bracket mechanism is mainly configured for mounting and fixing, which facilitates the connection of the electric system 3 to the vehicle body and the subsequent connection of the electric system to the vehicle door 1. As shown in FIG. 1, in the present disclosure, the bracket mechanism includes a vehicle body member 31 and a vehicle door member 32, wherein the vehicle door member 32 is rotatable on the vehicle body member 31; and the vehicle body member 31 is a fixed member, which is generally directly fixed on the vehicle body. The fixing method may be one or more of screwing, riveting or welding.

As shown in FIG. 1, the vehicle door member 32 serves as a bridging member and a rotating member. In the present disclosure, the vehicle door member 32 and a vehicle door connecting member 34 are connected to each other. The connecting mechanism includes the vehicle door connecting member 34 arranged on the vehicle door member 32, wherein the vehicle door connecting member 34 is rotatable on the vehicle door member 32 under the push of the side opening driving mechanism 39. Such an arrangement can facilitate the side opening operation of the vehicle door 1 while achieving the subsequent connection of the vehicle door 1 to the hinge assembly.

As shown in FIG. 1, in the present disclosure, the locking mechanism includes a first locking part 37 and a second locking part 36 that are connected to the vehicle door member 32 for locking and limiting the vehicle door 1, wherein a portion of the first locking part 37 is connected to the vehicle door member 32, another portion of the first locking part is connected to the vehicle body member 31, and the first locking part 37 is configured to lock the rotation of the vehicle door member 32 on the vehicle body member 31; and a portion of the second locking part 36 is connected to the vehicle door connecting member 34, another portion of the second locking part is connected to the vehicle door member 32, and the second locking part 36 is configured to lock the rotation of the vehicle door connecting member 34 on the vehicle door member 32. The first locking part 37 is configured to lock and fix the vehicle door member 32 on the vehicle body, and the second locking part 36 is configured to lock between the vehicle door 1 and the vehicle door member 32.

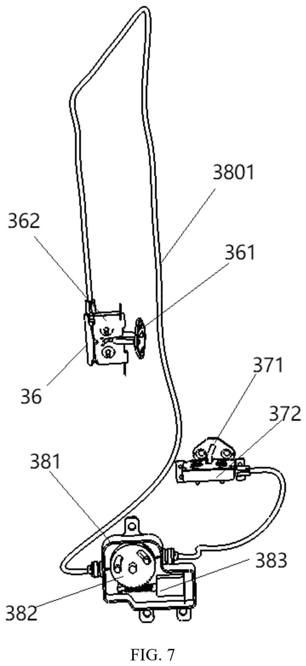

With reference to FIG. 1 and FIG. 7, in the present disclosure, the first locking part 37 mainly includes a first lock catch 371 and a first lock body 372, wherein the first lock catch 371 is connected to the side of the vehicle door member 32 proximal to the side wall assembly 2, and the first lock body 372 is connected to the side wall assembly 2; and the second locking part 36 includes a second lock catch 361 and a second lock body 362, the second lock body 362 is connected to the vehicle door 1, and the second lock catch 361 is connected to the vehicle door member 32. Specifically, the second lock catch is connected to the side of the vehicle door member 32 proximal to the vehicle door 1, and is arranged on a second extension plate 323 in actual implementation.

Further, in the present disclosure, the vehicle door member 32 is connected to the vehicle body member 31 through a rotating component 4. The rotating component 4 is mainly provided to achieve the connection of the vehicle door member 32 to the vehicle body member 31 and further achieve the rotation of the vehicle door member 32 on the vehicle body member 31.

In addition, in the present disclosure, the rotating component 4 includes a first rotating component 4 and a second rotating component 4. Through the arrangement of the first rotating component 4 and the second rotating component 4, a spatial three-dimensional connecting rod structure is formed between the vehicle door member 32 and the vehicle body member 31, the connecting rod 42, and the rotating rod 41, such that the vehicle door 1 can be opened in a scissor door manner.

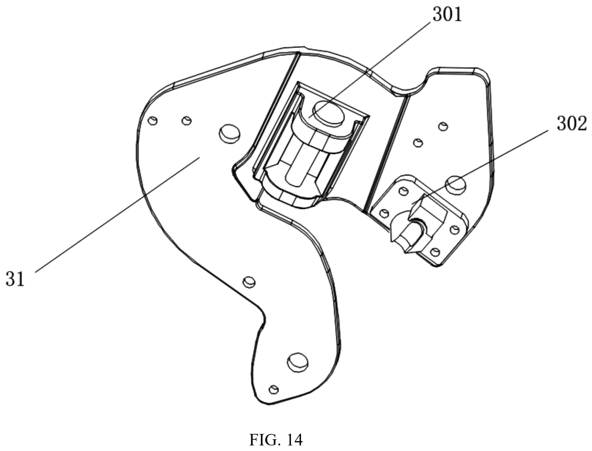

As shown in FIG. 1, in the present disclosure, the first rotating component includes a rotating rod 41, wherein one end of the rotating rod 41 is rotatably connected to the vehicle body member 31, and the other end of the rotating rod is rotatably connected to the vehicle door member 32. With reference to FIG. 1 and FIG. 14, in the present disclosure, the rotating rod 41 is connected to the vehicle body member 31 through a first rotating shaft assembly 301, and the first rotating shaft assembly 301 includes two groups of first assembling plates and a first shaft, wherein the two groups of first assembling plates are vertically arranged on the vehicle body member 31, separately, the rotating rod 41 is assembled between the two groups of first assembling plates, and the first shaft passes through the two groups of first assembling plates and the rotating rod 41. In addition, in the present disclosure, the vehicle door member 32 is riveted to the rotating rod 41, and meanwhile, the vehicle door member 32 is riveted to the vehicle door member 32 through a rotating shaft. The vehicle door member 32 is rotatable around the central axis of the rotating rod 41.

In addition, as shown in FIG. 1, in the present disclosure, the second rotating component includes a connecting rod 42, wherein one end of the connecting rod 42 is rotatably connected to the vehicle door member 32, and the other end of the connecting rod is connected to the vehicle body member 31 through a ball joint mechanism 43. As shown in FIG. 14, the connecting rod 42 and the vehicle door member 32 are connected in a manner similar to that of the first rotating shaft assembly 301.

The connection between the connecting rod 42 and the vehicle door member 32 is achieved by a ball joint mechanism 43. As shown in FIG. 1 and FIG. 14, the ball joint mechanism 43 mainly includes a ball socket box 302 arranged on the vehicle body member 31, wherein the ball socket box 302 is provided with a ball socket structure, and a ball joint is arranged at one end of the ball socket box 302 where the connecting rod 42 is assembled. The ball joint is disposed in the ball socket structure and spherically rotates in the ball socket structure to form a spherical pair, and a ball joint bushing is injection-molded on the ball joint. The ball joint bushing is tightly combined with the ball joint, such that the ball joint is more wear-resistant.

Further, as shown in FIG. 1, in the present disclosure, the locking mechanism further includes a locking control component 38. In the present disclosure, the arrangement of the locking control component 38 can control the unlocking operation of the first locking part 37 or the second locking part 36 as required.

As shown in FIG. 7, in the present disclosure, the locking control component 38 includes a turntable 382, wherein the turntable 382 is connected with a rotation driving member configured to drive the turntable 382 to rotate; the rotation driving member drives the turntable 382 to rotate to control the unlocking operations of the first locking part 37 and the second locking part 36; and the turntable 382 is connected to the first locking part 37 or the second locking part 36 through a cable 3801. In the present disclosure, the turntable 382 serves as a connecting member and a control member, and the rotation driving member may be a driving motor 383 or a gas driving component. In the present disclosure, the rotation driving member may drive the turntable 382 to rotate, thereby cooperating with the cable 3801 to achieve the unlocking operation of the first locking part 37 or the second locking part 36. In the present disclosure, one end of the cable 3801 is connected to the turntable 382, and the other end of the cable is connected to the lock body of the first locking part 37 or the second locking part 36, and the lock body is separated from the corresponding lock catch by pulling the corresponding lock body through the cable 3801, so as to achieve the corresponding unlocking operation, thereby facilitating the side opening or swing-up opening of the vehicle door 1 as required during subsequent use.

With reference to FIG. 7 and FIG. 8, in the present disclosure, the rotation driving member includes a driving motor 383, wherein a worm shaft is arranged on an output shaft of the driving motor 383, a worm gear is arranged on the turntable 382, and the driving motor 383 drives the turntable 382 to rotate through a worm gear-worm shaft mechanism 384.

Further, in the present disclosure, the cable 3801 mainly includes a cable core, wherein a cable head 3802 is arranged at an end portion of the cable core, and a cable sheath is arranged outside the cable core.

Further, in the present disclosure, the turntable 382 is separately connected to the first locking part 37 and the second locking part 36 by individual cables 3801. Based on this arrangement, the unlocking operation of the first locking part 37 or the second locking part 36 can be controlled by one turntable 382, which can reduce the use of the locking control component 38, that is, reduce the number of the locking control components 38. Therefore, the costs are saved.

Meanwhile, in the present disclosure, the cable 3801 is connected to the turntable 382 through the regulating component. In the present disclosure, the arrangement of the regulating component has one function of facilitating the connection between the cable 3801 and the turntable 382, and another function of preventing the synchronous unlocking of the first locking part 37 and the second locking part 36 that are simultaneously controlled by the rotation of the turntable 382 during subsequent use.

As shown in FIG. 8, in the present disclosure, the regulating component includes a regulating arc-shaped groove 3821 formed on the turntable 382 and a side surface communication groove 3822, wherein the regulating arc-shaped groove is in communication with a side surface of the turntable 382 through the side surface communication groove 3822; and the cable head 3802 of the cable 3801 is disposed in the regulating arc-shaped groove 3821. Based on the above design, stable connection of the cable 3801 to the turntable 382 is facilitated. In the present disclosure, the regulating arc-shaped groove 3821 is an arc-shaped groove structure, and the length of the regulating arc-shaped groove 3821 is greater than the size of the cable head 3802, such that the cable head 3802 is movable in the regulating arc-shaped groove 3821, while the side surface communication groove 3822 is mainly configured for facilitating the threading of the cable core to avoid mounting interference with the turntable 382. Meanwhile, in the present disclosure, the cable sheath of the cable 3801 is disposed on the outer side of the turntable 382. In the present disclosure, the cable sheath is embedded in a locking housing 381. Such an arrangement facilitates subsequent pulling of the cable core and achieves subsequent unlocking operations.

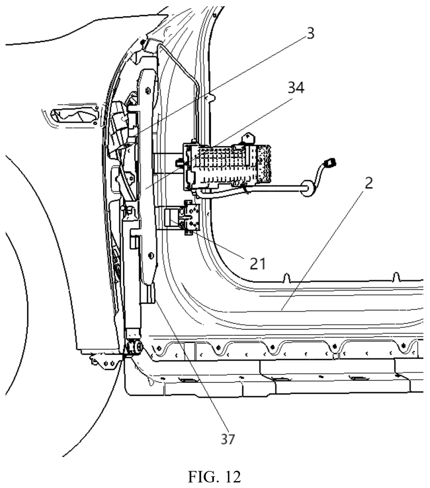

Based on the above, it can be known that, in the present disclosure, the locking control component 38 further includes a locking housing 381. In the present disclosure, the turntable 382, the rotation driving member, and the above-mentioned regulating component are all disposed in the locking housing 381, the cable 3801 passes through the locking housing 381 and extends to the turntable 382, the cable sheath of the cable 3801 is embedded on an outer wall of the locking housing 381, and the locking housing 381 plays a role of limiting an end portion. In addition, the locking housing 381 also facilitates the subsequent mounting and assembly of the locking control component 38. As shown in FIG. 8 to FIG. 10 to FIG. 12, during the subsequent mounting, the locking control component 38 may be connected to the side wall assembly 2 through the locking housing 381, which facilitates the arrangement and placement of the locking control component 38 on the vehicle.

Further, as shown in FIG. 1, in the present disclosure, the vehicle door member 32 includes a frame body 321, wherein the frame body 321 is a main body structure of the vehicle door member 32. In the present disclosure, the structure and shape of the frame body 321 can be designed as required, as long as the strength is ensured and interference with adjacent components is avoided.

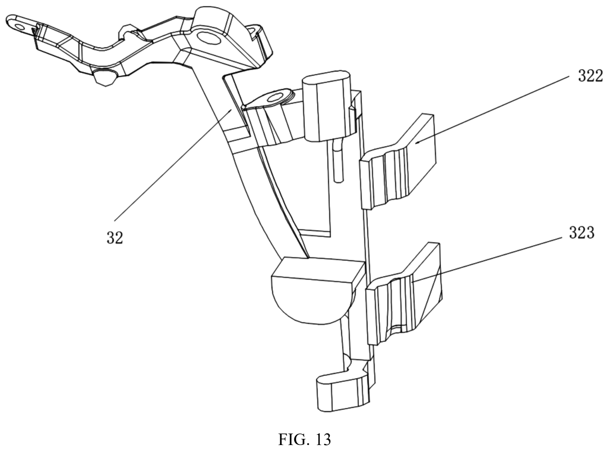

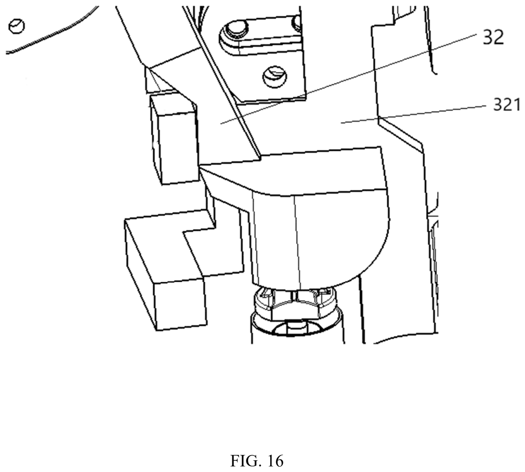

Meanwhile, as shown in FIG. 1, FIG. 13, and FIG. 16 (FIG. 16 is a partial schematic diagram of FIG. 13), in the present disclosure, the frame body 32 further includes a first extension plate 322 and a second extension plate 323, wherein the first extension plate 322 and the second extension plate 323 are disposed at an angle to the frame body 321; the first extension plate 322 is configured to be connected to the side opening driving mechanism 39; and the second extension plate 323 is configured to be connected to the second locking part 36. In the present disclosure, the first extension plate 322 and the second extension plate 323 may generally be arranged perpendicular to the frame body 321, and during subsequent use, the first extension plate 322 and the second extension plate 323 are arranged on the side surface of the side wall assembly 2, which facilitates lateral positioning of the vehicle door member 32 during assembly to a certain extent, thereby ensuring the subsequent assembly accuracy of the vehicle door member 32.

Another main function of the first extension plate 322 and the second extension plate 323 is to facilitate the connection and limiting of the vehicle door 1. In essence, it facilitates the mounting and connection of the side opening driving mechanism 39 and the second locking part 36 on the hinge assembly, and ensures the linkage between the vehicle door 1 and the vehicle door member 32 during subsequent movement, thereby ensuring the swing-up opening of the vehicle door 1.

Further, as shown in FIG. 1, in the present disclosure, the vehicle door connecting member 34 is connected to the vehicle door member 32 through a rotary support part 35. The rotary support part 35 includes a lower support block 352 arranged on the vehicle door member 32 and an upper support block 351 arranged on the vehicle door connecting member 34, wherein the upper support block 351 is connected to the lower support block 352 through a rotating pin shaft. The swing-up driving mechanism 33 includes a first driving mechanism and a second driving mechanism, wherein the first driving mechanism and the second driving mechanism are disposed at intervals on the vehicle door member 32. In the present disclosure, the arrangement of the rotary support part 35 facilitates the connection between the vehicle door connecting member 34 and the vehicle door member 32, and also facilitates the subsequent connection between the vehicle door 1 and the vehicle door member 32. Meanwhile, the rotary support part 35 serves as a rotating basis and serves as a rotating fulcrum in the case that the vehicle door 1 is opened laterally subsequently. In addition, in the present disclosure, a plurality of rotary support parts 35 may be arranged, which are disposed at intervals in the longitudinal direction, with two groups generally arranged.

Further, in the present disclosure, the side opening operation of the vehicle door 1 can be achieved by the side opening driving mechanism 39, and the swing-up opening operation of the vehicle door 1 can be achieved by the swing-up driving mechanism 33.

During the vehicle door 1 swing-up opening operation:
the vehicle door 1 opening operation step is as follows: the first locking part 37 is first opened, the second locking part 36 remains locked, a vehicle door lock is then released, and then the swing-up driving mechanism 33 is activated such that the vehicle door 1 is driven to rotate upward to perform a rotor-like movement by rotation of the vehicle door member 32, thereby achieving the vehicle door 1 swing-up opening operation; and the vehicle door 1 closing operation step is as follows: the swing-up driving mechanism 33 is activated again such that the vehicle door 1 is driven to rotate downward to perform a rotor-like movement by rotation of the vehicle door member 32, thereby achieving the vehicle door 1 swing-up closing operation. After the vehicle door 1 is closed, the first locking part 37 is locked, and the second locking part 36 remains in the locked state.

During the vehicle door 1 side opening operation:
the vehicle door 1 opening operation step is as follows: the first locking part 37 remains locked, the second locking part 36 is opened, the vehicle door lock is then released, and then the side opening driving mechanism 39 is activated such that the vehicle door 1 is enabled to rotate outward under the push of the side opening driving mechanism 39, thereby achieving the vehicle door 1 side opening operation; and the vehicle door 1 closing operation step is as follows: the side opening driving mechanism 39 is activated such that the vehicle door 1 is enabled to rotate inward under the pull of the side opening driving mechanism 39 until the vehicle door reaches a set closed position, the vehicle door lock then completes a snap-close action, and then the first locking part 37 maintains a locking action, and the second locking part 36 is locked.

That is, during the vehicle door 1 swing-up opening operation, the vehicle door 1 opening operation step is as follows: the first locking part 37 is controlled to unlock the rotation of the vehicle door member 32 on the vehicle body member 31, the second locking part 36 is controlled to lock the rotation of the vehicle door connecting member 34 on the vehicle door member 32, the vehicle door lock is controlled to be released, and the swing-up driving mechanism 33 is controlled to be started such that the vehicle door 1 is driven to rotate upward to perform a rotor-like movement by rotation of the vehicle door member 32; and the vehicle door 1 closing operation step is as follows: the swing-up driving mechanism 33 is controlled to be started such that the vehicle door is driven to rotate downward to perform a rotor-like movement by rotation of the vehicle door member 32 until the vehicle door 1 is closed, the first locking part 37 is then controlled to lock the rotation of the vehicle door member 32 on the vehicle body member 31, and the second locking part 36 is controlled to lock the rotation of the vehicle door connecting member 34 on the vehicle door member 32.

During the vehicle door 1 side opening operation, the vehicle door 1 opening operation step is as follows: the first locking part 37 is controlled to lock the rotation of the vehicle door member 32 on the vehicle body member 31, the second locking part 36 is controlled to unlock the rotation of the vehicle door connecting member 34 on the vehicle door member 32, the vehicle door lock is controlled to be released, and the side opening driving mechanism 39 is controlled to be started such that the vehicle door 1 is driven to rotate outward by rotation of the vehicle door connecting member 34; and the vehicle door 1 closing operation step is as follows: the side opening driving mechanism 39 is controlled to be started such that the vehicle door is driven to rotate inward by rotation of the vehicle door connecting member 34 until the vehicle door reaches a set closed position, the vehicle door lock is then controlled to be closed, the first locking part 37 is controlled to lock the rotation of the vehicle door member 32 on the vehicle body member 31, and the second locking part 36 is controlled to lock the rotation of the vehicle door connecting member 34 on the vehicle door member 32.

Based on the foregoing operation manner, it can be seen that the electric system 3 disclosed herein can achieve the side opening and swing-up opening operations of the vehicle door 1, thereby increasing an application scope of the present disclosure.

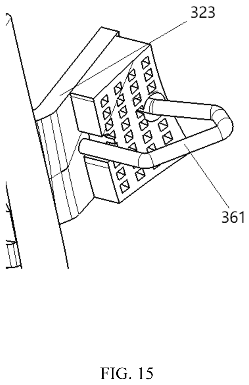

Further, in the present disclosure, during the vehicle door 1 swing-up opening operation: in the case that the vehicle door 1 is opened, the side opening driving mechanism 39 is powered on. As shown in FIG. 15, a damper is arranged on the second locking part 36. Based on this arrangement, the jitter in the case that the vehicle door 1 swing-up is opened can be reduced. Because in the case that the vehicle door 1 swing-up is opened, the side opening driving mechanism 39 is powered on, such that the side opening driving mechanism 39 is in a preoperating state. Such an arrangement can ensure that the driving end of the side opening driving mechanism 39 remains stable under load, thus avoiding shaking due to gaps between the driving end and adjacent components. This, in turn, avoids shaking of the vehicle door 1 during its upward movement. In the present disclosure, the damper is arranged on the second locking part 36, and the damper is a limiting block, which can avoid relative movement between the vehicle door 1 and the vehicle door connecting member 34, such that the vehicle door 1 is free from jitter during its upward rotation.

Similarly, in the case that the vehicle door 1 is opened laterally, during the vehicle door 1 opening operation, the swing-up driving mechanism 33 is required to be powered on, and the first locking part 37 is provided with a damper.

A vehicle is provided. The vehicle includes a side wall assembly 2 and a vehicle door 1, wherein the vehicle door 1 is connected to the side wall assembly 2 through an electric system 3. The electric system 3 is connected to the side wall assembly 2 of a vehicle body. Based on this arrangement, the present disclosure enables the vehicle door 1 to have two door opening methods, such that the vehicle door 1 disclosed herein has a wider application range.

In the present disclosure, the electric system 3 is mainly connected to the side wall assembly 2 of the vehicle body, the vehicle body member 31 in the electric system 3 is fixedly connected to the vehicle body, the vehicle body connecting member is connected to the vehicle door 1, and the hinge assembly is connected with a connecting mechanism and a driving mechanism for cooperation, so as to achieve two opening methods for the vehicle door 1.

Meanwhile, in the present disclosure, the side wall assembly 2 is provided with a plurality of clearance grooves for clearance. The clearance grooves are provided in various ways, mainly to avoid the mounting interference between the electric system 3 and the side wall assembly 2.

In the present disclosure, at least two clearance grooves are formed on the side of the side wall assembly 2 proximal to the vehicle door 1. The two clearance grooves are configured to provide clearance for the first extension plate 322 and the second extension plate 323 in the electric system 3.

In addition, in the present disclosure, the vehicle further includes a control system, wherein the control system includes a detection module, the detection module is connected with a control module, and the control module is connected with an execution module. The detection module may be a radar or a camera on depth measurement, and is mainly configured to identify the surrounding environment of the vehicle body and identify whether an obstacle is present around the vehicle door 1. The control module is mainly configured to receive a signal transmitted by the detection module, perform identification processing, and transmit an instruction, and the control module may be an on-board computer. The execution module is mainly configured to perform a corresponding operation based on the instruction transmitted by the control module, and the execution module may be a side opening driving mechanism 39, a swing-up driving mechanism 33, a rotation driving member, or the like, and is mainly configured for a corresponding structure for opening and closing the vehicle door 1. Through the setting of the control system in the present disclosure, the opening and closing operations of the vehicle door 1 can be intelligently achieved.

In addition, to facilitate intelligent opening of the vehicle door 1, the control system further includes an input module. The input module may be one or more of voice input, physical switch switching, and large screen switch switching, or a combination thereof.

Further, in the present disclosure, the side wall assembly 2 is provided with a home-position support mechanism. The home-position support mechanism is an auxiliary support structure, which mainly prevents the vehicle door 1 from sagging due to gravity and reduces the stress of the hinge assembly. In the present disclosure, the home-position support mechanism includes a supporting and limiting block arranged on the side wall assembly 2. In the case that the vehicle door 1 is in the closed position, the vehicle door member 32 presses against the supporting and limiting block, and the supporting and limiting block may be connected to the side wall assembly 2 by a bolt. In the case that the vehicle door 1 is in the closed position, the vehicle door member 32 presses against the supporting and limiting block; such an arrangement enables the vehicle door member 32 to be supported by the supporting and limiting block, which can reduce the stress on the rotating component 4 and is conducive to prolonging the service life of the rotating component 4.

Meanwhile, in the present disclosure, in order to facilitate matching and positioning, the vehicle door member 32 is provided with a limiting groove body, and the vehicle door member 32 presses against the supporting and limiting block through the limiting groove body. Meanwhile, in order to increase the contact area between the supporting and limiting block and the vehicle door member 32, the supporting and limiting block may be designed as a stepped block, and the limiting groove body on the vehicle door member 32 may also be designed as a stepped structure.

Meanwhile, in order to avoid interference, in the present disclosure, the supporting and limiting block is arranged at the end of the vehicle door member 32 proximal to the front of the vehicle.

Examples are as follows:
The electric system 3 disclosed herein can mainly achieve the electric swing-up opening and the electric side opening of the vehicle door 1, and can achieve the coexistence of two modes, and can achieve the electric switching of the two modes by the locking control component 38.

As shown in FIG. 1, the electric system 3 disclosed herein mainly includes a vehicle body member 31, a vehicle door member 32, a vehicle door connecting member 34, a rotating rod 41, a connecting rod 42, a locking control component 38, a side opening driving mechanism 39, a swing-up driving mechanism 33, a first locking part 37, and a second locking part 36.

The side opening driving mechanism 39 disclosed herein mainly includes an electric side door actuator; and the swing-up driving mechanism 33 mainly includes an electric strut and a gas strut arranged at both ends of the vehicle door member 32.

With reference to FIG. 7 and FIG. 15, the first locking part 37 includes a first lock catch 371, wherein the first lock catch 371 is configured to lock the vehicle door member 32 on the side wall assembly 2; and the second locking part 36 includes a second lock catch 361, wherein the second lock catch 361 is configured to lock the vehicle door 1 on the vehicle door member 32.

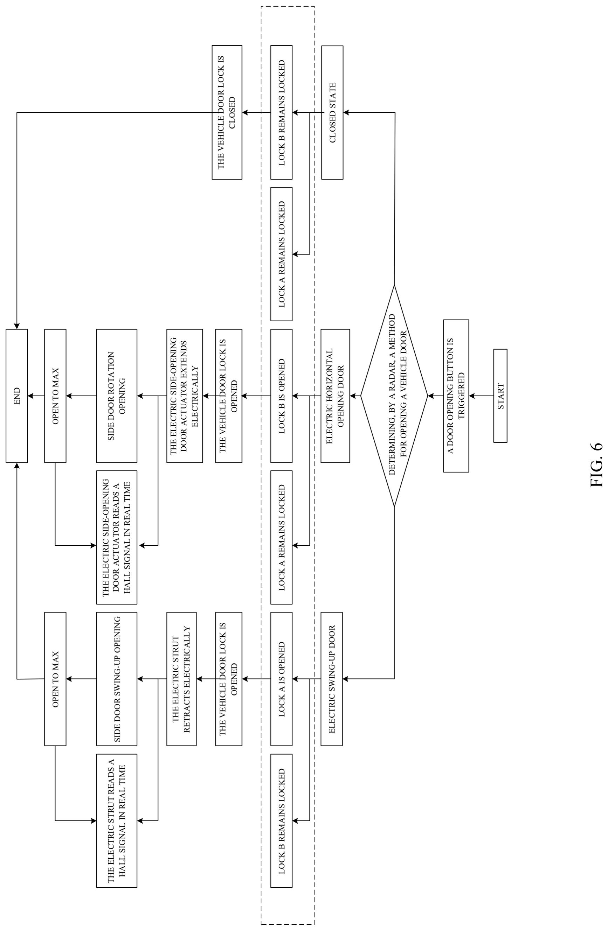

The following describes methods for opening the vehicle door 1 with reference to FIG. 6.

In the electric swing-up door mode (illustrated in adaptive mode):
The vehicle door 1 opening is as follows: in the case that the vehicle door 1 receives a door opening signal, the radar determines a method for opening the vehicle door 1, and in the case that it is determined that an upper distance is large, a swing-up door opening method is selected: the first locking part 37 (namely, the lock A) is first opened, the second locking part 36 (namely, the lock B) remains locked, the vehicle door lock is then released, and then the electric strut retracts electrically such that the vehicle door 1 is pulled to rotate upward to perform a rotor-like movement; and in addition, the strut includes a Hall counting function to record the movement position of the vehicle door 1 in real time, and the movement is stopped after a preset Hall count is reached, and at this time, a full opening cycle of the swing-up door is completed.

The vehicle door 1 closing is as follows: in the case that the vehicle door 1 receives a door closing signal, the action sequence is as follows: the electric strut extends electrically such that the vehicle door 1 is pushed to rotate downward to perform a rotor-like movement; in addition, the strut includes a Hall counting function to record the movement position of the vehicle door 1 in real time, and the movement is stopped after a set Hall count is reached, and at this time, the vehicle door lock completes a snap-close action; and then the first locking part 37 implements a locking action, the second locking part 36 remains locked, and at this time, a full closing cycle of the swing-up door is completed.

In the electric side opening mode (illustrated in adaptive mode):
The vehicle door 1 opening is as follows: in the case that the vehicle door 1 receives a door opening signal, the radar determines a method for opening the vehicle door 1, and in the case that it is determined that a side distance is large, an electric side opening method is selected: the action sequence is as follows: the first locking part 37 remains locked, the second locking part 36 is opened, the vehicle door lock is then released, and then the strut of the electric side door actuator extends electrically such that the vehicle door 1 is pushed outward to perform a rotational movement; and in addition, the strut includes a Hall counting function to record the movement position of the vehicle door 1 in real time, and the movement is stopped after a set Hall count is reached, and at this time, a full opening cycle of the electric side-opening door is completed.

The vehicle door 1 closing is as follows: in the case that the vehicle door 1 receives a door closing signal, the action sequence is as follows: the strut of the electric side door actuator retracts electrically such that the vehicle door 1 is pulled to rotate inward to perform a rotational movement; in addition, the strut includes a Hall counting function to record the movement position of the vehicle door 1 in real time, the movement is stopped after a set Hall count is reached, and at this time, the vehicle door lock completes a snap-close action; and then the first locking part 37 maintains the locking action, the second locking part 36 is locked, and at this time, a full closing cycle of the swing-up door is completed.

In the present disclosure, the electric swing-up switching is as follows: the first locking part 37 is opened, the second locking part 36 remains locked, and then the electric strut retracts and extends electrically such that the vehicle door 1 swing-up rotates upward and downward.

The electric side opening switching is as follows: the first locking part 37 remains locked, the second locking part 36 is opened, and then a driving arm of the electric side opening actuator retracts and extends electrically to achieve the electric rotational side opening and closing of the vehicle door 1.

According to the present disclosure, through the arrangement of the locking control component 38, the first locking part 37 and the second locking part 36 are controlled by one motor, and the combination of the first locking part 37 and the second locking part 36 has three states, all of which can be achieved by this module. The details are as follows (with reference to Table 1):

**Table 1 Table of correspondence between vehicle door states and a locking control component**

| Vehicle door state | Lock A (first locking part) | Lock B (second locking part) | Turntable |
|---|---|---|---|
| Closing | Locking | Locking | No rotation |
| Swing-up door switching | Opening | Locking | Reverse rotation |
| Side-opening door switching | Locking | Opening | Forward rotation |

The locking control component 38 includes a rotation driving member. The rotation driving member includes a motor, a worm gear-worm shaft drive, and a turntable 382.

The swing-up door switching is as follows: in the case that the motor drives the turntable 382 to rotate reversely, the turntable 382 drives the cable 3801 to move, such that the first locking part 37 is opened and the second locking part 36 is kept in a locked state, thereby achieving the electric swing-up door switching.

The side-opening door switching is as follows: in the case that the motor drives the turntable 382 to rotate forward, the turntable 382 drives the cable 3801 to move, such that the second locking part 36 is opened and the first locking part 37 remains in a locked state, thereby achieving the electric side opening switching.

In the closed state, the motor is stationary, the first locking part 37 and the second locking part 36 remain in the locked state, and the vehicle door 1 is in the locked state.

Meanwhile, in the present disclosure, in the case that the vehicle door 1 swing-up is opened, a damper is arranged at the second locking part 36 and the electric side door actuator is required to be powered on, such that a micro-current is applied, which can well reduce or eliminate the jitter during the vehicle door 1 swing-up opening.

In the present disclosure, the damper provides a buffer force between the side wall assembly 2 and the vehicle door member 32, such that the vehicle door 1 is minimized from jitter during unlocking and movement. Meanwhile, the electric side door actuator is supplied with a micro-current for offsetting small gaps between the mechanisms of the electric side door actuator, such that the vehicle door 1 is free from jitter.

Similarly, a manner of eliminating the jitter during the side opening of the vehicle door 1 is also the same as that described above.

The first locking part 37 is provided with a damper and an electric strut for passing a micro-current.

The damper provides a buffer force between the side wall assembly 2 and the vehicle door member 32, such that the vehicle door 1 minimizes the jitter during unlocking and movement. Meanwhile, the actuator is supplied with a micro-current for offsetting small gaps between mechanisms, such that the vehicle door 1 is free from jitter.

With reference to FIG. 2 and FIG. 7, in the present disclosure, the second lock body 362 of the second locking part 36 and the electric side-opening door actuator are required to be mounted inside the vehicle door 1. One end of the swing-up driving mechanism 33 is connected to the side wall assembly 2, and the other end of the swing-up driving mechanism is connected to the vehicle door member 32. The first lock catch 371 of the first locking part 37 is connected to the vehicle door member 32, and the first lock body 372 is connected to the side wall assembly 2. In order to avoid interference, the side wall assembly is required to provide adaptive clearance for the vehicle door member 32.

### Example 2

The electric system 3 disclosed herein can achieve two opening methods: electric upward swing-up rotation (swing-up opening) and electric horizontal rotational opening (side opening), and the two methods can be switched electrically.

The electric swing-up door is implemented as follows: the control module controls the locking control component 38 to open the first locking part 37 and lock the second locking part 36, such that no relative movement is generated between the vehicle door member 32 and the vehicle door connecting member 34, and then a spatial three-dimensional connecting rod structure is formed between the vehicle door member 32, the vehicle door connecting member 34 and the vehicle body member 31, the connecting rod 42, and the rotating rod 41. After a current is supplied to the electric strut through the control module, an extension and retraction action of the electric strut is implemented, thereby achieving the upward and downward rotation of the vehicle door 1.

The electric side opening is implemented as follows: the control module controls the locking control component 38 to lock the first locking part 37 and open the second locking part 36, such that the vehicle door member 32 and the vehicle door connecting member 34 are rotatable relative to each other, and no relative movement is generated between the vehicle door 1 and the vehicle body member 31. In this case, a current is supplied to the electric side door actuator, and the electric side door driving arm implements an extension and retraction action, thereby driving the vehicle door 1 to perform an electric side opening rotation for opening.

In the present disclosure, the locking mechanism includes a first locking part 37, a second locking part 36, a locking control component 38, and cables 3801.

During the electric swing-up door opening, the control module controls the motor in the locking control component 38 to rotate reversely and pull the cables 3801 to release the first locking part 37 and lock the second locking part 36, such that the hinge implements the structural switching for the electric swing-up door.

During the electric side opening, the controller controls the motor in the locking control component 38 to rotate forward and pull the cables 3801 to lock the first locking part 37 and release the second locking part 36, such that the hinge implements the structural switching for the electric side opening.

In the present disclosure, the electric side opening actuator is fixed to the vehicle door 1 through the housing of the electric side opening actuator, and the driving arm of the electric side opening actuator is connected to the second extension plate 323 of the vehicle door member 32. This design can achieve that the electric side-opening door and the electric swing-up door are integrated on one hinge.

The switching between the electric swing-up door and the electric side opening can be achieved through the following methods of command input:
Adaptive switching: a distance between an obstacle above and an obstacle on the ground is recognized by using a detection radar, and a control module autonomously determines, based on the distance, an opening method;
Voice command: the switching between the electric swing-up door and the electric side opening is controlled by voice;
Hard switch: by setting a hard switch somewhere on the vehicle, the switching between the electric swing-up door and the electric side opening is achieved directly by pressing a button; and
Triggering by using a soft switch or the like: the switching between the electric swing-up door and the electric side opening is controlled by using a soft switch on a large screen.

During the electric swing-up door movement, a micro-current is applied to the electric side door actuator, the second locking part 36 is locked, and a damper is designed between the vehicle door connecting member 34 and the vehicle door 1, such that no relative movement is generated between the vehicle door 1 and the vehicle door connecting member 34, and then the vehicle door 1 is free from jitter during upward rotation.

During the electric side opening movement, the electric strut is applied with a micro-current, and a damper is designed between the vehicle door member 32 and the side wall assembly 2, such that no shaking occurs between the side wall and the vehicle door member 32, and then the vehicle door 1 is free from jitter during rotation.

Obviously, the specific implementation of the present disclosure is not limited by the above manner, and various insubstantial improvements made by using the method concept and the technical solutions of the present disclosure fall within the scope of protection of the present disclosure.

## Claims

1. A dual-mode vehicle door electric system, comprising a hinge assembly, wherein the hinge assembly is connected with a connecting mechanism and a driving mechanism;
the connecting mechanism is configured to be connected to a vehicle door;
the driving mechanism comprises a side opening driving mechanism and a swing-up driving mechanism;
the side opening driving mechanism is configured to push the vehicle door to rotate around the hinge assembly;
the swing-up driving mechanism is configured to drive the vehicle door to rotate through the hinge assembly;
the hinge assembly comprises a bracket mechanism and a locking mechanism;
the bracket mechanism comprises a vehicle body member and a vehicle door member, the vehicle door member being rotatable on the vehicle body member;
the connecting mechanism comprises a vehicle door connecting member arranged on the vehicle door member, the vehicle door connecting member being rotatable on the vehicle door member under push of the side opening driving mechanism; and
the locking mechanism comprises a first locking part and a second locking part that are connected to the vehicle door member for locking and limiting the vehicle door.

2. The dual-mode vehicle door electric system according to claim 1, wherein a portion of the first locking part is connected to the vehicle door member, another portion of the first locking part is connected to the vehicle body member, and the first locking part is configured to lock rotation of the vehicle door member on the vehicle body member; and a portion of the second locking part is connected to the vehicle door connecting member, another portion of the second locking part is connected to the vehicle door member, and the second locking part is configured to lock rotation of the vehicle door connecting member on the vehicle door member.

3. The dual-mode vehicle door electric system according to claim 1, wherein the vehicle door member is connected to the vehicle body member through a rotating component, and the rotating component comprises a first rotating component and a second rotating component, wherein the first rotating component comprises a rotating rod, one end of the rotating rod is rotatably connected to the vehicle body member, and the other end of the rotating rod is rotatably connected to the vehicle door member;
the vehicle door member is rotatable around a central axis of the rotating rod; and
the second rotating component comprises a connecting rod, one end of the connecting rod is rotatably connected to the vehicle door member, and the other end of the connecting rod is connected to the vehicle body member through a ball joint mechanism.

4. The dual-mode vehicle door electric system according to claim 1, wherein the locking mechanism further comprises a locking control component;
the locking control component comprises a turntable; the turntable is connected with a rotation driving member configured to drive the turntable to rotate; the rotation driving member drives the turntable to rotate to control unlocking operations of the first locking part and the second locking part; and
the turntable is connected to the first locking part or the second locking part by a cable.

5. The dual-mode vehicle door electric system according to claim 4, wherein
the turntable is separately connected to the first locking part and the second locking part by individual cables;
each of the cables is connected to the turntable by a regulating component; and
the regulating component comprises a regulating arc-shaped groove formed on the turntable and a side surface communication groove, wherein the regulating arc-shaped groove is in communication with a side surface of the turntable through the side surface communication groove; and a cable head of the cable is disposed in the regulating arc-shaped groove, and a cable sheath of the cable is disposed on an outer side of the turntable.

6. The dual-mode vehicle door electric system according to claim 1, wherein the vehicle door member comprises a frame body, a first extension plate, and a second extension plate, wherein the first extension plate and the second extension plate are disposed at an angle to the frame body; the first extension plate is configured to be connected to the side opening driving mechanism; and the second extension plate is configured to be connected to the second locking part.

7. The dual-mode vehicle door electric system according to claim 1, wherein the vehicle door connecting member is connected to the vehicle door member through a rotary support part; the rotary support part comprises a lower support block arranged on the vehicle door member and an upper support block arranged on the vehicle door connecting member; the upper support block is connected to the lower support block through a rotating pin shaft; and the swing-up driving mechanism comprises a first driving mechanism and a second driving mechanism, and the first driving mechanism and the second driving mechanism are disposed at intervals on the vehicle door member.

8. The dual-mode vehicle door electric system according to claim 1, wherein the side opening driving mechanism is configured to be achieve a vehicle door side opening operation;
the swing-up driving mechanism is configured to achieve a vehicle door swing-up opening operation;
during the vehicle door swing-up opening operation:
steps of a vehicle door opening operation are as follows:
a first locking part is first opened, a second locking part remains locked, a side door lock is then released, and then the swing-up driving mechanism is activated such that the vehicle door is driven to rotate upward to perform a rotor-like movement by rotation of the vehicle door member, thereby achieving the vehicle door swing-up opening operation; and
steps of a vehicle door closing operation are as follows:
the swing-up driving mechanism is activated again such that the vehicle door is driven to rotate downward to perform a rotor-like movement by rotation of the vehicle door member, thereby achieving a vehicle door swing-up closing operation; and
after the vehicle door is closed, the first locking part is locked, and the second locking part still remains in a locked state;
and, during the vehicle door side opening operation:
steps of the vehicle door opening operation are as follows:
the first locking part remains locked, the second locking part is opened, the side door lock is then released, and then the side opening driving mechanism is activated such that the vehicle door is enabled to rotate outward under the push of the side opening driving mechanism, thereby achieving the vehicle door side opening operation; and
steps of the vehicle door closing operation are as follows:
the side opening driving mechanism is activated such that the vehicle door is enabled to rotate inward under the pull of the side opening driving mechanism until the vehicle door reaches a set closed position, the side door lock then completes a snap-close action, and then the first locking part maintains a locking action, and the second locking part is locked.

9. The dual-mode vehicle door electric system according to claim 8, wherein during a vehicle door opening operation, in a case that the vehicle door performs the opening operation, the side opening driving mechanism or the swing-up driving mechanism is powered on; and, the first locking part or the second locking part or both is provided with a damper.

10. A vehicle, comprising a side wall assembly and a vehicle door, wherein the vehicle door is connected to the side wall assembly through the electric system as defined in any one of claims 1 to 9;
the electric system is connected to the side wall assembly of a vehicle body;
the side wall assembly is provided with a plurality of clearance grooves for clearance; and
the vehicle further comprises a control system, wherein the control system comprises a detection module, the detection module is connected with a control module, and the control module is connected with an execution module.

11. The vehicle according to claim 10, wherein the side wall assembly is provided with a home-position support mechanism, and the home-position support mechanism comprises a support limiting block arranged on the side wall assembly; and in a case that the vehicle door is in a closed position, the vehicle door member presses against the support limiting block.
